# EUROPÄISCHE PATENTSCHRIFT

(11) **EP 0 895 144 B1**
(45) Veröffentlichungstag und Bekanntmachung des Hinweises auf die Patenterteilung: **04.10.2001**
(21) Anmeldenummer: 98113522.1
(22) Anmeldetag: 20.07.1998
(51) Int. Cl.: G05B 11/32, G05B 15/02, G05B 19/045, G05B 19/05, H05B 37/02, H04Q 9/00, G06K 5/00, G07F 7/08

(54) **Spannungsversorgungsschaltung**
Power supply circuit
Circuit d'alimentation en tension

(30) Priorität: 01.08.1997 DE 29713777 U
(43) Veröffentlichungstag der Anmeldung: 03.02.1999
(73) Patentinhaber: SIEMENS AKTIENGESELLSCHAFT, 80333 München (DE)
(72) Erfinder: Hirmer, Gerald Dipl.-Ing., 92708 Mantel (DE)

(56) Entgegenhaltungen:
- DE-A- 19 635 163
- FR-A- 2 526 601
- AMEREIN ROLAND SCHEUERER REINHARDSCHLAGENHAUFE: "Neue kompakte Geräte. Rundum SPS-SPEKTRUM" ENGINEERING & AUTOMATION, Bd. 2, Nr. 13, 1991, Seite 4-7 XP002079788

## Beschreibung

Die vorliegende Erfindung betrifft eine Spannungsversorgungsschaltung für eine Zentraleinheit einer speicherprogrammierbaren Steuerung, der mittels der Spannungsversorgungsschaltung zumindest zwei Versorgungsspannungen zuführbar sind, die aus einer Eingangsspannung gewonnen werden.

Spannungsversorgungsschaltungen für Zentraleinheiten speicherprogrammierbarer Steuerungen sind im Stand der Technik allgemein bekannt.

Weiterhin ist es bekannt, mittels derartiger Spannungsversorgungsschaltungen der jeweiligen Zentraleinheit zumindest zwei Versorgungsspannungen zuzuführen, die aus einer an der Spannungsversorgungsschaltung anstehenden Eingangsspannung gewonnen werden.

Spannungsversorgungsschaltungen, die mehrere Versorgungsspannungen ausgeben, müssen gewissen Einschaltbedingungen genügen. Dazu werden bisher die mindestens zwei Versorgungsspannungen gleichzeitig oder mit zeitlichem Versatz hoch- bzw. heruntergefahren. Die Länge der Spannungsrampen ist abhängig von der Belastung der Eingangsspannung und den Bauteilstreuungen. Definierte Einschaltbedingungen der von der Spannungsversorgungsschaltung gelieferten Versorgungsspannungen sind deshalb nur mit entsprechend langen Verzögerungszeiten und/oder erheblichem Schaltungsaufwand realisierbar.

Die Aufgabe der vorliegenden Erfindung besteht darin, eine Spannungsversorgungsschaltung für eine Zentraleinheit einer speicherprogrammierbaren Steuerung anzugeben, wobei der Zentraleinheit mittels der Spannungsversorgungsschaltung zumindest zwei Versorgungsspannungen zuführbar sind, die aus einer Eingangsspannung gewonnen werden, die vordefinierten Einschaltbedingungen hinsichtlich der zeitlichen Abfolge des Anschaltens der jeweiligen Versorgungsspannung an die Zentraleinheit genügen.

Diese Aufgabe wird im Falle einer Spannungsversorgungsschaltung der oben genannten Art dadurch gelöst, daß die Schaltung derart wirkt, daß beim Erhöhen der Eingangsspannung ausgehend von einem Ruhepotential die erste Versorgungsspannung an der Zentraleinheit ansteht, sobald die Eingangsspannung einen oberen Eingangsspannungs-Schwellwert überschreitet und auch die zweite Versorgungsspannung an der Zentraleinheit ansteht, sobald die erste Versorgungsspannung einen Primärversorgungsspannungsschwellwert überschreitet und daß beim Verringern der Eingangsspannung ausgehend von einem Wert der Eingangsspannung, bei dem beide Versorgungsspannungen an der Zentraleinheit anstehen, die zweite Versorgungsspannung nicht mehr an der Zentraleinheit ansteht, sobald die Eingangsspannung einen unteren Eingangsspannungs-Schwellwert unterschreitet und auch die zweite Versorgungsspannung nicht mehr an der Zentraleinheit ansteht, sobald die zweite Versorgungsspannung einen Sekundärversorgungsspannungsschwellwert unterschreitet.

Mit einer Spannungsversorgungsschaltung der vorstehend definierten Art ist es vorteilhafterweise möglich, der Zentraleinheit der speicherprogrammierbaren Steuerung zwei Versorgungsspannungen zuzuführen, von denen die zweite Versorgungsspannung erst zugeschaltet wird, wenn die erste Versorgungsspannung einen Primärversorgungsspannungsschwellwert überschreitet.

Um ein stabiles Hochlaufen der Stromversorgung zu gewährleisten, ist es erforderlich, erst ab einer Eingangsspannung oberhalb des Eingangsspannungsschwellwertes die erste bzw. die zweite Versorgungsspannung zuzuschalten und analog bei einer Eingangsspannung unterhalb eines unteren Eingangsspannungsschwellwertes diese wieder abzuschalten.

Vorteilhafterweise werden dabei die Versorgungsspannungen abhängig von den Spannungspegeln entweder der anderen Versorgungsspannnung oder der Eingangsspannung zu- und abgeschaltet. Die Spannungen werden unabhängig von Belastung, Eingangsspannung und Bauteilsteuerung in der kürzest möglichen. Zeit eiN- und ausgeschaltet.

Ein Ausführungsbeispiel der Erfindung wird nachstehend anhand der Zeichnungen näher erläutert. Dabei zeigen:
- FIG 1: eine schematische Darstellung der Spannungsversorgungsschaltung und
- FIG 2: ein Timing-Diagramm.

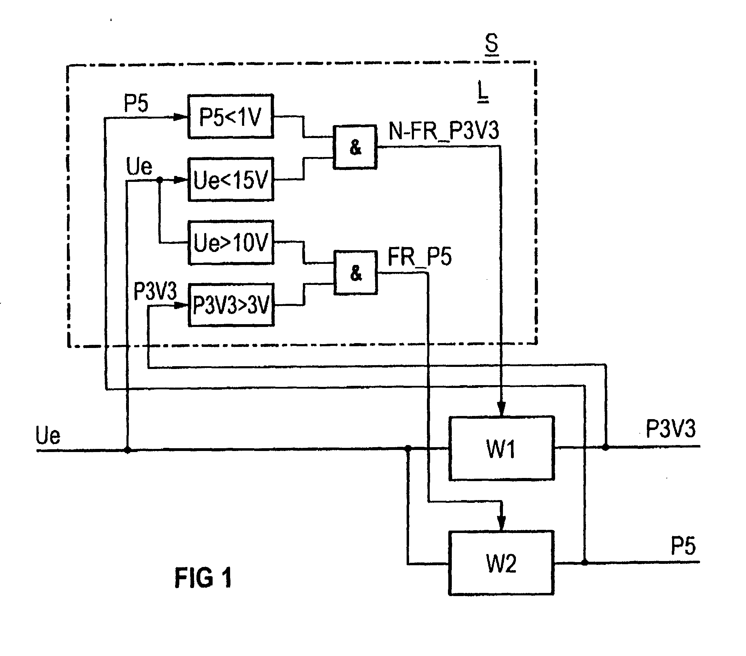

Gemäß FIG 1 weist die Spannungsversorgungsschaltung S einen ersten Wandler W1 auf, der aus der Eingangsspannung Ue die erste Versorgungsspannung P3V3 generiert. Weiterhin ist in der Spannungsversorgungsschaltung S der zweite Wandler W2 vorgesehen, der aus der Eingangsspannung Ue die zweite Versorgungsspannung P5 generiert.

Die Wandler W1, W2 werden von der Einschaltlogik L der Versorgungsspannung S aktiviert, so daß die erste Versorgungsspannung P3V3 am Ausgang des ersten Wandlers W1 erst ansteht, wenn der Wandler W1 von der Einschaltlogik L aktiviert ist. Ganz analog steht die zweite Versorgungsspannung P5 am Ausgang des Wandlers W2 erst an, wenn der zweite Wandler W2 von der Einschaltlogik L aktiviert ist.

Zur Aktivierung der Wandler W1, W2 weist die Einschaltlogik L zwei Ausgänge N-FR_P3V3 bzw. FR_P5 zur Aktivierung des ersten Wandlers W1 bzw. zur Aktivierung des zweiten Wandlers W2 auf, wobei das vorangstellte "N-" eine Invertierung des betreffenden Signals bezeichnet. Der Einschaltlogik L werden als Eingangswerte die Eingangsspannung Ue und die Versorgungsspannungen P3V3 und P5 zugeführt.

Innerhalb der Einschaltlogik L werden die Spannungen Ue, P3V3, P5 verknüpft. Der Wandler W1 wird mittels des Freigabesignals N-FR_P3V3 aktiviert, wenn beim Erhöhen der Eingangsspannung Ue ausgehend von einem Ruhepotential die Eingangsspannung Ue einen oberen Eingangsspannungsschwellwert V15, in diesem Falle 15 V, überschreitet.

Ferner wird mittels der Einschaltlogik L beim Erhöhen der Eingangsspannung Ue, ausgehend von einem Ruhepotential, auch der Wandler W2 mittels des Aktivierungssignals FR_P5 aktiviert, sobald die erste Versorgungsspannung P3V3 eine Primärversorgungsspannungsschwellwert V3, in diesem Falle 3V, überschreitet.

Das Ruhepotential ist im Falle des Ausführungsbeispiels ein Potential, bei dem weder die erste noch die zweite Versorgungsspannung P3V3, P an der Zentraleinheit der speicherprogrammierbaren Steuerung ansteht, also z.B. das 0V-Potential.

Ganz analog zum Einschalten der Versorgungsspannungen beim Erhöhen der Eingangsspannung Ue erfolgt beim Verringern der Eingangsspannung Ue ausgehend von einem Wert der Eingangsspannung Ue, bei dem beide Versorgungsspannungen P3V3, P5 an der Zentraleinheit anstehen, mittels der Einschaltlogik L dadurch, daß die Einschaltlogik L das Aktivierungssignal FR_P5 für den zweiten Wandler W2 nicht mehr generiert und damit dieser Wandler W2 deaktiviert wird, sobald die Eingangsspannung Ue einen unteren Eingangsspannungsschwellwert V10, in diesem Falle 10 V unterschreitet, und daß die Einschaltlogik L das Aktivierungssignal N-FR_P3V3 für den ersten Wandler W1 nicht mehr generiert, und damit der erste Wandler W1 deaktiviert wird, sobald die zweite Versorgungsspannung P5 einen Sekundärversorgungsspannungsschwellwert V1, in diesem Falle 1V, unterschreitet.

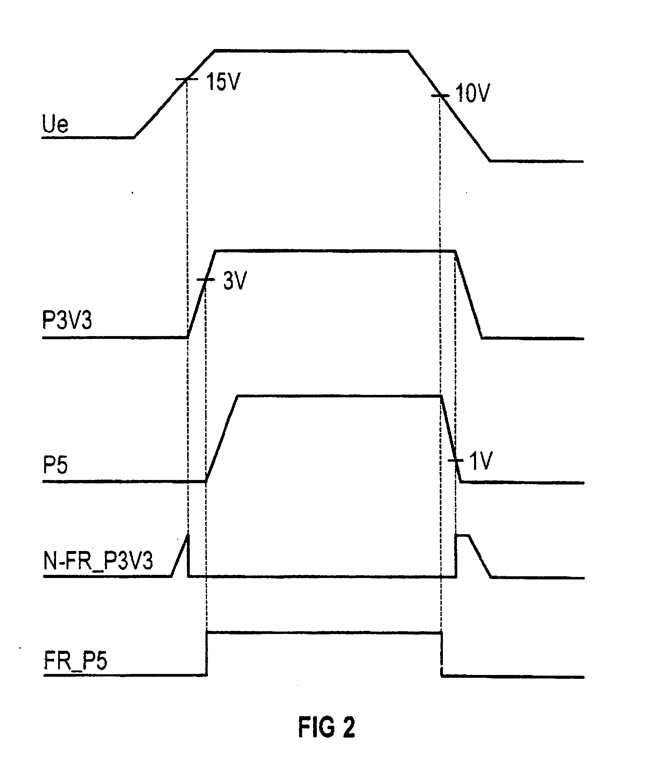

Das Zeitverhalten der beiden Versorgungsspannungen P3V3, P5 in Bezug auf die Eingangsspannung Ue beim Hoch- oder Runterfahren der Eingangsspannung Ue ist aus der FIG 2 ersichtlich, wobei nachfolgend einige Aspekte der Funktionsweise der erfindungsgemäßen Spannungsversorgungsschaltung weiter erläutert werden.

Getaktete Stromversorgungen haben bei kleiner Eingangsspannung eine größere Stromaufnahme als bei Nennspannung. Dieses Verhalten führt häufig zu den Problemen, daß entweder die Eingangssicherung auslöst oder die Strombegrenzung der Versorgung anspricht. Beim Einschalten wird daher das Signal N-FR_P3V3 ab einem Eingangsspannungsschwellwert V15 low. Dies bewirkt, daß die Stromversorgung erst ab dieser Spannung anläuft. Dadurch wird eine überhöhte Stromaufnahme bei Unterspannung verhindert.

Die erste Versorgungsspannung P3V3 muß anliegen sobald die zweite Versorgungsspannung P5 vorhanden ist und sollte aber nicht längere Zeit alleine anstehen. Beim Ausschalten wird das Signal N-FR_P3V3 high, wenn die zweite Versorgungsspannung P5 unter den Sekundärversorgungsspannungsschwellwert V1 fällt. Dadurch wird erreicht, daß die erste Versorgungsspannung P3V3 unmittelbar nach dem Einbrechen der zweiten Versorgungsspannung P5 abgeschaltet wird.

Grundsätzlich ist der Darstellung gemäß FIG 2 auch entnehmbar, daß die Spannungen bei Einschalten nicht unbegrenzt schnell ansteigen können, sondern eine bestimmte Zeit zum hochfahren brauchen.

Der Einsatz der erfindungsgemäßen Spannnungsversorgungsschaltungen ist nicht auf Zentraleinheiten speicherprogrammierbarer Steuerungen beschränkt, sondern ist ebenso in elektrischen Geräten jeglicher Art, die zwei unterschiedliche Versorgungsspannungen benötigen, deren Einschaltbedingungen gewissen zeitlichen Kriterien genügen müssen, einsetzbar.

Insbesondere ist das Prinzip der erfindungsgemäßen Spannungsversorgungsschaltung auch auf Spannnungsversorgungsschaltungen zur Ausgabe von mehr als zwei Versorgungsspannungen, z.B. einer ersten, einer zweiten, und einer n-ten Versorgungsspannung erweiterbar, wobei beim Erhöhen der Eingangsspannung die m-te Versorgungsspannung (2<m<n) erst an der Zentraleinheit ansteht, sobald die (m-1)-te Versorgungsspannung einen jeweiligen Schwellwert überschritten hat und analog beim Verringern der Eingangsspannung die (m-1)-te erste Versorgungsspannung (2<m<n) nicht mehr an der Zentraleinheit ansteht, sobald die m-te Versorgungsspannung einen jeweiligen Schwellwert unterschreitet.

## Patentansprüche

1. Spannungsversorgungsschaltung für eine Zentraleinheit einer speicherprogrammierbaren Steuerung der mittels der Spannungsversorgungsschaltung (S) zumindest zwei Versorgungsspannungen (P3V3, P5) zuführbar sind, die aus einer Eingangsspannung (Ue) gewonnen werden, **dadurch gekennzeichnet, daß** die Schaltung (S) derart wirkt,
- **daß** beim Erhöhen der Eingangsspannung (Ue) ausgehend von einem Ruhepotential
- die erste Versorgungsspannung (P3V3) an der Zentraleinheit ansteht, sobald die Eingangsspannung (Ue) einen oberen Eingangsspannungsschwellwert (V15) überschreitet, und
- auch die zweite Versorgungsspannung (P5) an der Zentraleinheit ansteht, sobald die erste Versorgungsspannung (P3V3) einen Primärversorgungsspannungsschwellwert (V3) überschreitet, und
- **daß** beim Verringern der Eingangsspannung (Ue) ausgehend von einem Wert der Eingangsspannung (Ue), bei dem beide Versorgungsspannungen (P3V3, P5) an der Zentraleinheit anstehen
- die zweite Versorgungsspannung (P5) nicht mehr an der Zentraleinheit ansteht, sobald die Eingangsspannung (Ue) einen unteren Eingangsspannungsschwellwert (V10) unterschreitet, und
- auch die erste Versorgungsspannung (P3V3) nicht mehr an der Zentraleinheit ansteht, sobald die zweite Versorgungsspannung (P5) einen Sekundärversorgungsspannungsschwellwert (V1) unterschreitet.

## Claims

1. Power supply circuit for a central processing unit of a programmable controller to which, by means of the power supply circuit (S), at least two supply voltages (P3V3, P5) which are obtained from one input voltage (Ue) can be supplied, **characterised in that** the circuit (S) acts in such a way
- that in the case of the increasing of the input voltage (Ue) starting from an open-circuit potential
- the first supply voltage (P3V3) is applied to the central processing unit as soon as the input voltage (Ue) exceeds an upper input-voltage threshold value (V15), and
- the second supply voltage (P5) is also applied to the central processing unit as soon as the first supply voltage (P3V3) exceeds a primary supply-voltage threshold value (V3), and
- that in the case of the reducing of the input voltage (Ue) starting from a value of the input voltage (Ue) at which both supply voltages (P3V3, P5) are applied to the central processing unit
- the second supply voltage (P5) is no longer applied to the central processing unit as soon as the input voltage (Ue) falls below a lower input-voltage threshold value (V10), and
- the first supply voltage (P3V3) is also no longer applied to the central processing unit as soon as the second supply voltage (P5) falls below a secondary supply-voltage threshold value (V1).

## Revendications

1. Circuit d'alimentation en tension pour unité centrale d'une commande à programme enregistré, à laquelle peuvent être appliquées, au moyen du circuit (S) d'alimentation en tension, au moins deux tensions (P3V3, P5) d'alimentation, qui sont obtenues à partir d'une tension (Ue) d'entrée, **caractérisé en ce que** le circuit (S) agit de façon,
- que, lorsque la tension (Ue) d'entrée s'élève à partir d'un potentiel de repos,
- la première tension (P3V3) d'alimentation s'applique à l'unité centrale dès que la tension (Ue) d'entrée dépasse une valeur (V15) de seuil supérieure de tension d'entrée, et
- la deuxième tension (P5) d'alimentation s'applique également à l'unité centrale dès que la première tension (P3V3) d'alimentation dépasse une valeur (V3) de seuil de tension d'alimentation primaire, et
- que, lorsque la tension (Ue) d'entrée s'abaisse à partir d'une valeur de la tension (Ue) d'entrée pour laquelle les deux tensions (P3V3, P5) d'alimentation s'appliquent à l'unité centrale,
- la deuxième tension (P5) d'alimentation ne s'applique plus à l'unité centrale dès que la tension (Ue) d'entrée devient inférieure à une valeur (V10) de seuil inférieure de la tension d'entrée, et
- la première tension (P3V3) d'alimentation ne s'applique pas non plus à l'unité centrale dès que la deuxième tension (P5) d'alimentation devient inférieure à une valeur (V1) de seuil de tension d'alimentation secondaire.
